(19) Europäisches Patentamt / European Patent Office / Office européen des brevets

(11) **EP 4 527 815 A1**

(12) **EUROPÄISCHE PATENTANMELDUNG**

(43) Veröffentlichungstag:
26.03.2025   Patentblatt 2025/13

(21) Anmeldenummer: 24199210.6

(22) Anmeldetag: **09.09.2024**

(51) Internationale Patentklassifikation (IPC):
*C04B 28/06* (2006.01)   *C04B 28/14* (2006.01)
*C04B 41/00* (2006.01)   *C04B 41/52* (2006.01)
*C04B 41/70* (2006.01)   *C04B 111/72* (2006.01)

(52) Gemeinsame Patentklassifikation (CPC):
(C-Sets verfügbar)
**C04B 41/009; C04B 28/06; C04B 28/14;
C04B 41/52; C04B 41/70;** C04B 2111/72     (Forts.)

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(30) Priorität:   25.09.2023   DE 102023003881

(71) Anmelder: STO SE & Co. KGaA
79780 Stühlingen (DE)

(72) Erfinder:
• **Holzer, Michael**
**78315 Radolfzell (DE)**
• **Sadrina, Frank**
**79780 Stühlingen (DE)**
• **Braunger, Simon**
**70780 Stühlingen (DE)**

(74) Vertreter: **Gottschalk, Matthias**
**Gottschalk Maiwald**
**Patentanwalts- und Rechtsanwalts- (Schweiz)**
**GmbH**
**Florastrasse 14**
**8008 Zürich (CH)**

(54) **VERFAHREN ZUR HERSTELLUNG EINER PUTZSCHICHT, ZWEI-KOMPONENTEN-PUTZSYSTEM**

(57)     Die Erfindung betrifft ein Verfahren zur Herstellung einer überwiegend oder vollständig mineralisch gebundenen Putzschicht, insbesondere einer Oberputz-, Unterputz-, Armierungs- oder Spachtelschicht, umfassend die Schritte:
a) Bereitstellen einer Tonerdezement als Bindemittel enthaltenden Putzmasse,
b) Applizieren der Putzmasse auf einen zu beschichtenden bauseitigen Untergrund oder ein zu beschichtendes Bauelement,
c) Aufsprühen einer Alkalisalz-haltigen wässrigen Lösung auf die applizierte Putzmasse zum Beschleunigen des Aushärtens der Putzmasse.

Die Erfindung betrifft ferner ein Zwei-Komponenten-Putzsystem.

EP 4 527 815 A1

(52) Gemeinsame Patentklassifikation (CPC): (Forts.)

C-Sets
**C04B 28/06, C04B 14/06, C04B 22/143,
C04B 2103/20, C04B 2103/44, C04B 2103/46,
C04B 2103/0057, C04B 2103/65;
C04B 28/14, C04B 7/32, C04B 14/06,
C04B 2103/20, C04B 2103/44, C04B 2103/46,
C04B 2103/0057, C04B 2103/65;
C04B 41/009, C04B 28/02;
C04B 41/52, C04B 41/508;
C04B 41/52, C04B 2103/14, C04B 41/4543,
C04B 41/4578, C04B 41/5014, C04B 41/502,
C04B 2103/0008, C04B 41/4558**

## Beschreibung

Die Erfindung betrifft ein Verfahren zur Herstellung einer Putzschicht, die überwiegend oder vollständig mineralisch gebunden ist. Bei der Putzschicht kann es sich insbesondere um eine Oberputz-, Unterputz-, Armierungs- oder Spachtelschicht handeln. Darüber hinaus betrifft die Erfindung ein Zwei-Komponenten-Putzsystem zur Ausbildung einer überwiegend oder vollständig mineralisch gebundenen Putzschicht, insbesondere einer Oberputz-, Unterputz-, Armierungs- oder Spachtelschicht.

Bevorzugter Anwendungsbereich der Erfindung sind Putzfassaden, insbesondere Putzfassaden auf Dämmschichten sowie Wärmedämmverbundsysteme. Darüber hinaus kann das Verfahren auch zur Herstellung von Putzschichten auf anderen Untergründen, beispielsweise auf Betonoberflächen oder auf Plattenwerkstoffen, eingesetzt werden.

Stand der Technik

Putzfassaden können bauseits, das heißt vor Ort auf der Baustelle, oder im Werk eines Herstellers, beispielsweise eines Fertighausherstellers, hergestellt werden. Ist letzteres der Fall, werden üblicherweise ganze Wandelemente einschließlich der Fassade im Werk vorgefertigt. Diese müssen dann nur noch auf die Baustelle gebracht und dort montiert werden.

Die industrielle Herstellung eines vorgefertigten Wandelements umfasst in der Regel eine Vielzahl an Prozessschritten. Ist einer davon das Aufbringen einer Putzmasse bzw. eines Putzmörtels zur Ausbildung einer Putzfassade, besteht ein hohes Interesse daran, dass der Putzmörtel schnell abbindet bzw. aushärtet. Denn dann kann zeitnah der nächste Prozessschritt ausgeführt bzw. das Wandelement fertiggestellt werden. Dies führt zu einer Verkürzung der Verweilzeit im Werk und damit zu einer Erhöhung des Durchsatzes. Häufig werden daher schnell abbindende Putzmörtel eingesetzt, die bestimmte Zusätze enthalten.

Das Aufbringen eines Putzmörtels, und zwar unabhängig davon, ob bauseits oder im Werk, erfolgt in der Regel maschinell. Handelt es sich bei dem Putzmörtel um einen schnell abbindenden Putzmörtel, kann dies beim maschinellen Aufbringen zu Problemen führen. Denn zumindest ein Teil des Putzmörtels kann bereits in der Putzmaschine oder im hieran angeschlossenen Schlauch abbinden bzw. aushärten und damit zu irreparablen Schäden an der Putzmaschine bzw. am Schlauch führen. Die Gefahr ist in sogenannten "Totzonen", in denen der Putzmörtel ruht und nicht durch die Putzmaschine oder den Schlauch gefördert wird, besonders groß. In den Totzonen kann der abbindende Putzmörtel Anbackungen ausbilden, die vom nachströmenden Putzmörtel in Teilen mitgerissen werden, so dass dieser Klumpen von bereits abgebundenem bzw. ausgehärtetem Mörtel enthält. Der Putzmörtel ist dann für die weitere Verarbeitung nicht mehr geeignet.

Eine zu niedrige Wasserdosierung beim Anmachen des Putzmörtels, eine zu hohe Umgebungstemperatur und/oder eine zu lange Förderpause beim Aufbringen des Putzmörtels kann bzw. können zu den gleichen unerwünschten Effekten führen.

Eine weitere Problematik bei schnell abbindenden Putzmörteln besteht darin, dass die "offene Zeit" sehr kurz ist. Das heißt, dass der Putzmörtel in kurzer Zeit verarbeitet werden muss. Dies ist insbesondere ein Nachteil, wenn der applizierte Putzmörtel nachbearbeitet werden soll. Dies kann sowohl bei der maschinellen, als auch bei der händischen Verarbeitung von Putzmörteln zu Problemen führen.

Die vorliegende Erfindung ist mit der Aufgabe befasst, den zwischen einer kurzen Aushärtungszeit und einer langen Verarbeitungszeit bestehenden Zielkonflikt zu lösen. Zugleich soll die Maschinengängigkeit eines Putzmörtels bzw. einer Putzmasse verbessert werden.

Zur Lösung der Aufgabe werden das Verfahren mit den Merkmalen des Anspruchs 1 sowie das Zwei-Komponenten-Putzsystem mit den Merkmalen des Anspruchs 9 vorgeschlagen. Vorteilhafte Weiterbildungen der Erfindung sind den jeweiligen Unteransprüchen zu entnehmen.

Da Putzmassen auch Putzmörtel umfassen, wird nachfolgend einheitlich der Begriff "Putzmasse" bzw. "Putzsystem" verwendet.

Offenbarung der Erfindung

Das vorgeschlagene Verfahren zur Herstellung einer überwiegend oder vollständig mineralisch gebundenen Putzschicht, insbesondere Oberputz-, Unterputz-, Armierungs- oder Spachtelschicht, umfasst die Schritte:

a) Bereitstellen einer Tonerdezement als Bindemittel enthaltenden Putzmasse,
b) Applizieren der Putzmasse auf einen zu beschichtenden bauseitigen Untergrund oder ein zu beschichtendes Bauelement,
c) Aufsprühen einer Alkalisalz-haltigen wässrigen Lösung auf die applizierte Putzmasse zum Beschleunigen des Aushärtens der Putzmasse.

Bei dem vorgeschlagenen Verfahren werden eine Putzmasse und eine Alkalisalz-haltige wässrige Lösung zur Herstellung der Putzschicht verwendet. Diese bilden gemeinsam ein Zwei-Komponenten-Putzsystem aus. Die Komponenten werden jedoch nicht vorab gemischt, sondern getrennt voneinander auf eine zu beschichtende Oberfläche aufgebracht. Hierbei kann es sich sowohl um einen bauseitigen Untergrund als auch um ein zu beschichtendes Bauteil handeln, je nachdem, ob das Verfahren vor Ort auf einer Baustelle oder im Werk ausgeführt wird.

Durch das getrennte Aufbringen der beiden Komponenten kann der zeitliche Abstand frei bestimmt werden, der zwischen den Schritten b) und c) liegt. Über den zeitlichen Abstand kann somit - je nach Bedarf - eine längere oder kürzere Verarbeitungzeit der Putzmasse eingestellt werden. Ist keine Verarbeitung gefragt, können die Schritte b) und c) auch unmittelbar nacheinander ausgeführt werden. Auf diese Weise kann sofort das Aushärten bzw. Abbinden der Putzmasse eingeleitet werden.

Dadurch, dass bei dem vorgeschlagenen Verfahren die Putzmasse erst nach dem Aufbringen auf den bauseitigen Untergrund bzw. auf das zu beschichtende Bauteil in Kontakt mit der Alkalisalz-haltigen wässrigen Lösung gelangt, weist die Putzmasse eine gute Maschinengängigkeit auf, das heißt sie kann sehr gut maschinell appliziert werden. Insbesondere kann die Zusammensetzung so gewählt werden, dass die Gefahr eines vorzeitigen Abbindens bzw. Aushärtens beim maschinellen Aufbringen nicht besteht und es nicht zu den eingangs erwähnten Anbackungen in der Putzmaschine und/oder im Schlauch kommt. Das heißt, dass eine Zusammensetzung gewählt werden kann, die nicht schnell abbindet bzw. aushärtet, sondern eine lange offen Zeit aufweist. Das Abbinden bzw. Aushärten kann dann nach der Applikation durch Aufsprühen der Alkalisalz-haltigen wässrigen Lösung in Schritt c) des Verfahrens beschleunigt werden.

Die Zusammensetzung der Putzmasse kann ferner so gewählt werden, dass Schritt c) nicht zwingend ausgeführt werden muss, sondern lediglich die Schritte a) und b), um eine überwiegend oder vollständig mineralisch gebundene Putzschicht herzustellen.

Das heißt, dass auch ohne Schritt c) die Putzmasse abbinden bzw. aushärten würde, allerdings in einer deutlich längeren Zeit.

Gemäß einer bevorzugten Ausführungsform der Erfindung wird in Schritt c) die Putzmasse vollflächig mit der Lösung benetzt. Das heißt, dass die Alkalisalz-haltige wässrige Lösung, vorzugsweise möglichst gleichmäßig, über die gesamte Fläche der applizierten Putzmasse aufgesprüht wird. Dadurch ist sichergestellt, dass die Putzmasse in der Fläche gleichmäßig schnell abbindet bzw. aushärtet. Vorteilhafterweise wird die Alkalisalz-haltige wässrige Lösung maschinell aufgesprüht, beispielsweise mit Hilfe einer Spritzvorrichtung, die eine Düse zum Austragen der Alkalisalz-haltigen wässrigen Lösung aufweist. Mit Hilfe der Düse kann die Alkalisalz-haltige wässrige Lösung besonders gleichmäßig appliziert werden.

Des Weiteren wird vorgeschlagen, dass über den Alkalisalzanteil der Alkalisalz-haltigen wässrigen Lösung die Aushärtungszeit der Putzmasse eingestellt wird. Soll die Putzmasse besonders schnell abbinden bzw. aushärten, kann der Alkalisalzanteil erhöht werden bzw. umgekehrt.

Bevorzugt wird eine Alkalisalz-haltige wässrige Lösung verwendet, die 1 bis 60 Gew.-%, vorzugsweise 5 bis 50 Gew.-%, weiterhin vorzugsweise 10 bis 35 Gew.-%, Alkalisalz bezogen auf das Gesamtgewicht der Alkalisalz-haltigen wässrigen Lösung enthält. Ein zu geringer Alkalisalzgehalt führt nicht zu dem gewünschten Effekt einer deutlichen Beschleunigung des Abbindens bzw. Aushärtens.

Als Alkalisalze werden bevorzugt Lithiumsalze verwendet ausgewählt aus der Gruppe von Lithiumhydroxid (LiOH), Lithiumchlorid (LiCl), Lithiumcarbonat (Li2CO3) und Lithiumsulfat (Li2SO4), am bevorzugtesten dabei Li2SO4. Denn LiOH und Li2CO3 haben eine relativ geringe Löslichkeit und LiCl wirkt stark hygroskopisch und kann deshalb nach Aushärtung der Putzschicht zu Problemen führen. Li2SO4 hat diese Nachteile nicht. Ferner sollte der pH-Wert der Lithiumsalzlösung nicht über 9, sondern zwischen 6 und 8 (also relativ neutral) liegen bzw. eingestellt sein. Ein Grund hierfür ist das hohe Gefahrenpotential stark alkalischer Lösungen. Ein weiterer Grund ist technischer Natur. Lithium-Ionen bilden im alkalischen Medium relativ voluminöse Hydroxo-Komplexe aus, deren Migrationsfähigkeit stark eingeschränkt ist. Aufgrund der eingeschränkten Migrationsfähigkeit können die Lithium-Ionen weniger gut in den Tonerdezementhaltigen Mörtel eindringen und die Aushärtungsbeschleunigung auslösen. Bei neutralen pH-Werten sind die Li-Ionen westlich "beweglicher".

Besonders bevorzugt wird daher eine Alkalisalz-haltige wässrige Lösung verwendet, die Lithiumsulfat als Alkalisalz enthält.

In Schritt c) des vorgeschlagenen Verfahrens wird die Alkalisalz-haltige wässrige Lösung auf die applizierte Putzmasse aufgebracht bzw. aufgesprüht, wobei herkömmliche Sprühverfahren eingesetzt werden können. Bevorzugt werden in Schritt c) 40 bis 150g, vorzugsweise 50 bis 140g, weiterhin vorzugsweise 60 bis 130g, der Alkalisalz-haltigen wässrigen Lösung pro Quadratmeter applizierter Putzmasse aufgesprüht. Bei dem vorgeschlagenen Gehalt an Alkalisalz gelangen damit 5 bis 40g, vorzugsweise 6 bis 30g, weiterhin vorzugsweise 8 bis 20g Alkalisalz auf jeden Quadratmeter. Bei Verwendung von Lithiumsalz als Alkalisalz werden 0,6 bis 5,1g, vorzugsweise 0,75 bis 3,8g, weiterhin vorzugsweise 1,0 bis 2,5g Lithium-Ionen pro Quadratmeter applizierter Putzmasse aufgebracht. Hieraus ergibt sich unter Einbeziehung der applizierten Putzmasse - rein rechnerisch - ein Lithium-Ionen zu Tonerdezement-Verhältnis zwischen 0,08 und 0,67 Gew.-%, vorzugsweise zwischen 0,1 und 0,5 Gew.-%, weiterhin vorzugsweise zwischen 0,13 und 0,35 Gew.-%, jeweils bezogen auf das Gesamtgewicht der applizierten und mit der Alkalisalz-haltigen wässrigen Lösung besprühten Putzmasse. Bei diesen Verhältnissen lässt sich die Aushärtung der Putzmasse in gewünschter Weise kontrolliert einstellen.

Das Lithium-Ionen (Li+) zu Tonerdezement (TEZ)-Verhältnis kann sehr leicht nach der folgenden Formel berechnet werden:

$$\text{Gleichung 1:} \qquad (m(Li+)/m(TEZ))*100 \text{ Gew.\%}$$

Das bedeutet, dass bei Kenntnis des Tonerdezementgehalts der applizierten Putzmasse die Menge der aufzusprühenden Alkalisalz-haltigen wässrigen Lösung bzw. deren Gehalt an Alkalisalz berechnet werden kann. Der Tonerdezementgehalt wiederum lässt sich berechnen aus dem Tonerdezementgehalt der Trockenmischung und der Schichtstärke der herzustellenden Putzschicht. Dies soll anhand des nachfolgenden Beispiels erläutert werden:
Zur Herstellung einer 3 mm starken Armierungsschicht aus einer Trockenmischung, deren Tonerdezementgehalt 19 Gew.-% beträgt, werden etwa 1,33 kg Trockenmischung pro Quadratmeter und Millimeter Schichtstärke benötigt. Der Tonerdezementgehalt (m(TEZ) ergibt sich dann aus der folgenden Gleichung:

$$\text{Gleichung 2:} \qquad m(TEZ) = 3*1,33 \text{ kg} * 0,19 = 0,758 \text{ kg}$$

Setzt man dieses Ergebnis sowie das gewünschte Lithium-Ionen zu Tonerdezement-Verhältnis in die Gleichung 1 ein und löst nach m(Li+) auf, erhält man den Gehalt der benötigten Li+-Ionen.

Da bis zur Ausführung von Schritt c) die applizierte Putzmasse für eine gewisse Zeit gut verarbeitbar bleibt, wird in Weiterbildung der Erfindung vorgeschlagen, dass vor dem Aufsprühen der Alkalisalz-haltigen wässrigen Lösung die applizierte Putzmasse nachbearbeitet, beispielsweise geglättet, wird. Die Nachbearbeitung kann auch eine Strukturierung der Putzoberfläche beinhalten.

Ferner bevorzugt wird in Schritt a) eine Trockenzusammensetzung, die

- 5-40 Gew.-% Tonerdezement
- 0-10 Gew.-% Calcium-Sulfat
- 20-90 Gew.-% Füllstoffe, Sande und/oder Leichtzuschläge
- 0,1-5 Gew.-% Additive, wie beispielsweise Verdicker, Wasserrückhaltemittel, Verzögerer und/oder Hydrophobierungsmittel,
- 0,5-40 Gew.-% Redispersionspulver

jeweils bezogen auf das Gesamtgewicht der Ausgangsstoffe enthält, mit Wasser angemacht. Die Menge an zugegebenem Wasser hängt unter anderem von der gewünschten Konsistenz der Putzmasse ab. Diese kann variieren. Beispielsweise kann die Putzmasse eine etwas niedrigere Viskosität aufweisen, wenn sie maschinell appliziert wird. Beim manuellen Aufbringen ist dagegen eine etwas höhere Viskosität von Vorteil. Die angegebene Trockenzusammensetzung ist so gewählt, dass sie nach dem Anmachen mit Wasser auch ohne Schritt c), das heißt ohne Aufsprühen einer Alkalisalz-haltigen wässrigen Lösung aushärten würde, allerdings signifikant langsamer.

Des Weiteren bevorzugt wird in Schritt b) die Putzmasse maschinell appliziert. Analog zum maschinellen Aufsprühen der Alkalisalz-haltigen wässrigen Lösung kann durch maschinelles Applizieren der Putzmasse eine gleichmäßige Verteilung in der Fläche erzielt werden. Zudem kommt erst bei der maschinellen Applikation die gute maschinelle Verarbeitbarkeit der Putzmasse zum Tragen.

Darüber hinaus wird ein Zwei-Komponenten-Putzsystem zur Ausbildung einer überwiegend oder vollständig mineralisch gebundenen Putzschicht, insbesondere einer Oberputz-, Unterputz-, Armierungs- oder Spachtelschicht, vorgeschlagen. Die erste Komponente ist eine Tonerdezement als Bindemittel enthaltende Trockenzusammensetzung und die zweite Komponente ist eine Alkalisalz-haltige wässrige Lösung.

Das vorgeschlagene Zwei-Komponenten-Putzsystem kann insbesondere bei der Durchführung des zuvor beschriebenen erfindungsgemäßen Verfahrens verwendet werden. Mit dem Zwei-Komponenten-Putzsystem können somit die gleichen Vorteile erzielt werden. Insbesondere kann der eingangs erwähnte Zielkonflikt zwischen einer schnellen Abbinde- bzw. Aushärtezeit und einer langen Verarbeitungszeit gelöst werden, wenn die beiden Komponenten - gemäß dem erfindungsgemäßen Verfahren - nacheinander auf einem bauseitigen Untergrund oder einem zu beschichtenden Bauteil appliziert werden. Die beiden Komponenten werden demnach nicht vorab gemischt, sondern erst in Kontakt gebracht, nachdem die Putzmasse bereits appliziert worden ist.

Gegenüber herkömmlichen Zwei-Komponenten-Putzsystemen weist das vorliegende System den Vorteil auf, dass eine nicht fachgerechte Dosierung einer Komponente nahezu ausgeschlossen ist. Das heißt, dass Probleme, die sonst durch eine nicht fachgerechte Dosierung der Komponenten auftreten und ggf. zu einem Versagen des Systems führen, vorliegend nicht auftreten. Dies gilt insbesondere, wenn die erste Komponente bzw. die Trockenzusammensetzung so gewählt ist, dass sie nach dem Anmachen und Applizieren auch ohne die zweite Komponente abbindet bzw. aushärtet und die notwendigen technischen Anforderungen erfüllt, die üblicherweise an eine Putzschicht gestellt werden. Sollte das Aufsprühen der zweiten Komponente einmal vergessen werden, hat dies keinen Einfluss auf die technischen Parameter der Putzschicht. Idealerweise hat die zweite Komponente lediglich Einfluss auf die Erhärtungsgeschwindigkeit der aus der ersten Komponente hergestellten Putzmasse bzw. Putzschicht.

Gemäß einer bevorzugten Ausführungsform der Erfindung enthält die zweite Komponente 1 bis 60 Gew.-%, vorzugsweise 5 bis 50 Gew.-%, weiterhin vorzugsweise 10 bis 35 Gew.-% Alkalisalz bezogen auf das Gesamtgewicht der Alkalisalz-haltigen wässrigen Lösung.

Des Weiteren wird vorgeschlagen, dass die zweite Komponente Lithiumsulfat als Alkalisalz enthält.

Die erste Komponente bzw. die Trockenzusammensetzung kann enthalten

- 5-40 Gew.-% Tonerdezement
- 0-10 Gew.-% Calcium-Sulfat
- 20-90 Gew.-% Füllstoffe, Sande und/oder Leichtzuschläge
- 0,1-5 Gew.-% Additive, wie beispielsweise Verdicker, Wasserrückhaltemittel, Verzögerer und/oder Hydrophobierungsmittel,
- 0,5-40 Gew.-% Redispersionspulver

jeweils bezogen auf das Gesamtgewicht der Ausgangsstoffe.

Die Zusammensetzung der ersten Komponente ist so gewählt, dass sie nach dem Anmachen mit Wasser (Schritt a)) und dem Aufbringen auf eine zu beschichtende Oberfläche (Schritt b)) auch ohne Aufsprühen einer Alkalisalz-haltigen wässrigen Lösung (Schritt c)) aushärten würde. Das Aushärten würde jedoch eine längere Zeit in Anspruch nehmen. Die Vorteile des erfindungsgemäßen Zwei-Komponenten-Putzsystems kommen demnach nur zum Tragen, wenn Schritte a) bis c) des erfindungsgemäßen Verfahrens ausgeführt werden.

Der in der angegebenen Zusammensetzung enthaltene Tonerdezement bildet die mineralische Bindemittelkomponente aus, wobei die Zusammensetzung 5,0 bis 40,0 Gew.-%, vorzugsweise 10,0 bis 35,0 Gew.-%, weiterhin vorzugsweise 12,0 bis 32,0 Gew.-% Tonerdezement bezogen auf das Gesamtgewicht der Ausgangsstoffe enthält. Der enthaltene Tonerdezement ist vorzugsweise ein Tonerdezement nach DIN EN 14647.

Ferner können weitere Zemente oder Zementarten nach DIN EN 197-1 sowie Sonderzemente nach DIN EN 14216 wie beispielsweise Portlandzement, Portlandkompositzement oder Calciumsulfoaluminatzement enthalten sein. Bevorzugt ist aber der Gehalt an weiteren Zementen unter 5 Gew.-% bezogen auf das Gesamtgewicht der Ausgangsstoffe. Noch bevorzugter ist die Trockenzusammensetzung im Wesentlichen frei von weiteren Zementen, d.h. der Gehalt an weiteren Zementen liegt unter 1 Gew.-% bezogen auf das Gesamtgewicht der Ausgangsstoffe. Am bevorzugtesten liegt der der Gehalt an weiteren Zement unter der analytischen Nachweisgrenze.

Als Füllstoffe, Sande und/oder Leichtzuschläge kann die Trockenzusammensetzung silikatische, karbonatische, oxidische, hydroxidische und/oder sulfatische Füllstoffe und/oder Sande, wie beispielsweise Quarz, Cristobalit, Kalkstein, Marmor, Dolomit, Aluminiumhydroxid und/oder Bariumsulfate, enthalten. Alternativ oder ergänzend können mineralische Leichtzuschlagstoffe enthalten sein, wie beispielsweise Bims, Perlit, insbesondere expandierter Perlit, Blähglas, Blähton, Blähschiefer, Blähglimmer, geblähtes oder geschäumtes Vermiculit, und/oder Hohlglaskugeln. Es kann nicht nur ein Füllstoff bzw. eine Füllstoffart eingesetzt werden, sondern auch eine Füllstoffmischung aus verschiedenen Füllstoffen bzw. Füllstoffarten.

Die vorgeschlagene Zusammensetzung enthält 20,0 bis 90,0 Gew.-%, vorzugsweise 30,0 bis 85,0 Gew.-%, weiterhin vorzugsweise 40,0 bis 85,0 Gew.-% Füllstoffe, Sande und/oder Leichtzuschlagstoffe bezogen auf das Gesamtgewicht der Ausgangsstoffe.

Sofern die Trockenzusammensetzung Calcium-Sulfat (CaSO4) enthält, wird CaSO4 nicht als Füllstoff, sondern als Sulfatträger eingesetzt.

Als Additive kann die Trockenzusammensetzung Netz-/Dispergiermittel, Fließ(hilfs)mittel, Hydrophobierungsmittel, Beschleuniger, Verzögerer, Porenbildner, Entschäumer, Entstaubungsmittel, Wasserretentionsmittel, Fasern, Flammschutzmittel, Pigmente, Rheologiemittel, Verdicker und Thixotropiermittel enthalten. Der Anteil der Additive beträgt vorzugsweise maximal 5,0 Gew.-% bezogen auf das Gesamtgewicht der Ausgangsstoffe.

Die vorgeschlagene Trockenzusammensetzung enthält darüber hinaus Redispersionspulver, das heißt mindestens ein organisches Polymerbindemittel in Pulverform. Bevorzugt ist das mindestens eine organische Polymerbindemittel aus der Gruppe bestehend aus Vinylacetat/Ethylen-Copolymeren, Copolymeren auf Basis von Vinylaromaten, insbesondere gebildet aus Styrol und (Meth)acrylaten, Copolymeren auf Basis von Versaticsäurevinylestern, Copolymeren auf Basis von Acrylaten und ggf. Methacrylaten, insbesondere Reinacrylate, gewählt. Reinacrylate umfassen Homo- und insbesondere Copolymere von (Meth)acrylaten, das heißt Acrylaten und/oder Methacrylaten, ggf. auch mit (Meth)acrylsäure, das heißt Acryl- und/oder Methacrylsäure, als Comonomerbausteine. Bevorzugt gelangen demnach organische Polymerbindemittel zum Einsatz, bei denen die in Wasser dispergierbaren Polymere aus gleichen oder verschiedenen Monomeren gebildet sind, wobei mindestens eines der Monomere ein Acrylsäureester, Methacrylsäureester, Acrylsäure, Methacrylsäure, Vinylacetat, Vinylchlorid, Versatat, Acrylnitril oder eine vinylaromatische Verbindung darstellt. Besonders bevorzugt werden organische Polymerbindemittel auf Basis von Vinylacetat/Ethylen-Copolymeren und Copolymeren auf Basis von Versaticsäurevinylestern eingesetzt.

Die vorgeschlagene Zusammensetzung enthält 0,5 bis 40,0 Gew.-%, vorzugsweise 1,0 bis 35,0 Gew.-%, weiterhin vorzugsweise 1,0 bis 10,0 Gew.-% Redispersionspulver bezogen auf das Gesamtgewicht der Ausgangsstoffe.

Nachfolgend wird beispielhaft eine Trockenzusammensetzung für ein erfindungsgemäßes Zwei-Komponenten-Putzsystem angegeben. Diese enthält, jeweils bezogen auf das Gesamtgewicht der Ausgangsstoffe:

| | |
|---|---|
| 19,0 Gew.-% | Tonerdezement |
| 0,10 Gew.-% | Calcium-Sulfat |
| 77,8 Gew.-% | Füllstoffe, Sande und mineralischer Leichtzuschlag |
| 0,6 Gew.-% | Additive |
| 2,50 Gew.-% | Redispersionspulver |

Die Trockenzusammensetzung wird mit Wasser angemacht, so dass man im Ergebnis eine pastöse Putzmasse erhält, die insbesondere maschinell verarbeitbar ist.

**Patentansprüche**

1.  Verfahren zur Herstellung einer überwiegend oder vollständig mineralisch gebundenen Putzschicht, insbesondere einer Oberputz-, Unterputz-, Armierungs- oder Spachtelschicht,

    a) Bereitstellen einer Tonerdezement als Bindemittel enthaltenden Putzmasse,
    b) Applizieren der Putzmasse auf einen zu beschichtenden bauseitigen Untergrund oder ein zu beschichtendes Bauelement,
    c) Aufsprühen einer Alkalisalz-haltigen wässrigen Lösung auf die applizierte Putzmasse zum Beschleunigen des Aushärtens der Putzmasse.

2.  Verfahren nach Anspruch 1,
    **dadurch gekennzeichnet, dass** in Schritt c) die Putzmasse vollflächig mit der Lösung benetzt wird, wobei vorzugsweise die Alkalisalz-haltige wässrige Lösung maschinell aufgesprüht wird.

3.  Verfahren nach Anspruch 1 oder 2,
    **dadurch gekennzeichnet, dass** über den Alkalisalzanteil der Alkalisalz-haltigen wässrigen Lösung die Aushärtungszeit der Putzmasse eingestellt wird.

4.  Verfahren nach einem der vorhergehenden Ansprüche,
    **dadurch gekennzeichnet, dass** eine Alkalisalz-haltige wässrige Lösung verwendet wird, die 1 bis 60 Gew.-%, vorzugsweise 5 bis 50 Gew.-%, weiterhin vorzugsweise 10 bis 35 Gew.-%, Alkalisalz bezogen auf das Gesamtgewicht der Alkalisalz-haltigen wässrigen Lösung enthält.

5.  Verfahren nach einem der vorhergehenden Ansprüche,
    **dadurch gekennzeichnet, dass** eine Alkalisalz-haltige wässrige Lösung verwendet wird, die Lithiumsulfat als Alkalisalz enthält.

6.  Verfahren nach einem der vorhergehenden Ansprüche,
    **dadurch gekennzeichnet, dass** in Schritt c) 40 bis 150g, vorzugsweise 50 bis 140g, weiterhin vorzugsweise 60 bis 130g, der Alkalisalz-haltigen wässrigen Lösung pro Quadratmeter applizierter Putzmasse aufgesprüht werden.

7.  Verfahren nach einem der vorhergehenden Ansprüche,
    **dadurch gekennzeichnet, dass** vor dem Aufsprühen der Alkalisalz-haltigen wässrigen Lösung die applizierte Putzmasse nachbearbeitet, beispielsweise geglättet, wird.

8. Verfahren nach einem der vorhergehenden Ansprüche,

   **dadurch gekennzeichnet, dass** in Schritt a) eine Trockenzusammensetzung, die

   - 5-40 Gew.-% Tonerdezement
   - 0-10 Gew.-% Calcium-Sulfat
   - 20-90 Gew.-% Füllstoffe, Sande und/oder Leichtzuschläge
   - 0,1-5 Gew.-% Additive, wie beispielsweise Verdicker, Wasserrückhaltemittel, Verzögerer und/oder Hydrophobierungsmittel,
   - 0,5-40 Gew.-% Redispersionspulver

   jeweils bezogen auf das Gesamtgewicht der Ausgangsstoffe enthält, mit Wasser angemacht wird.

9. Verfahren nach einem der vorhergehenden Ansprüche,
   **dadurch gekennzeichnet, dass** in Schritt b) die Putzmasse maschinell appliziert wird.

10. Zwei-Komponenten-Putzsystem zur Ausbildung einer überwiegend oder vollständig mineralisch gebundenen Putzschicht, insbesondere einer Oberputz-, Unterputz-, Armierungs- oder Spachtelschicht, wobei die erste Komponente eine Tonerdezement als Bindemittel enthaltende Trockenzusammensetzung ist und die zweite Komponente eine Alkalisalz-haltige wässrige Lösung ist.

11. Zwei-Komponenten-Putzsystem nach Anspruch 10,
    **dadurch gekennzeichnet, dass** die zweite Komponente 1 bis 60 Gew.-%, vorzugsweise 5 bis 50 Gew.-%, weiterhin vorzugsweise 10 bis 35 Gew.-%, Alkalisalz bezogen auf das Gesamtgewicht der Alkalisalz-haltigen wässrigen Lösung enthält.

12. Zwei-Komponenten-Putzsystem nach Anspruch 10 oder 11,
    **dadurch gekennzeichnet, dass** die zweite Komponente Lithiumsulfat als Alkalisalz enthält.

13. Zwei-Komponenten-Putzsystem nach einem der Ansprüche 10 bis 12, **dadurch gekennzeichnet, dass** die erste Komponente

    - 5-40 Gew.-% Tonerdezement
    - 0-10 Gew.-% Calcium-Sulfat
    - 20-90 Gew.-% Füllstoffe, Sande und/oder Leichtzuschläge
    - 0,1-5 Gew.-% Additive, wie beispielsweise Verdicker, Wasserrückhaltemittel, Verzögerer und/oder Hydrophobierungsmittel,
    - 0,5-40 Gew.-% Redispersionspulver

    jeweils bezogen auf das Gesamtgewicht der Ausgangsstoffe enthält.

Europäisches
Patentamt

European
Patent Office

Office européen
des brevets

# EUROPÄISCHER RECHERCHENBERICHT

Nummer der Anmeldung

EP 24 19 9210

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 607 330 A1 (STO AG [DE]) 26. Juni 2013 (2013-06-26) | 10-13 | INV. C04B28/06 |
| A | * Absatz [0001] - Absatz [0031] * ----- | 1-9 | C04B28/14 C04B41/00 |
| A | EP 2 722 319 A2 (STO AG [DE]) 23. April 2014 (2014-04-23) * das ganze Dokument * ----- | 1-13 | C04B41/52 C04B41/70 C04B111/72 |
| A | JP 7 149687 B2 (TAIHEIYO CEMENT CORP; UNIV HOSEI; NIKOLA DESIGN & TECH INC) 7. Oktober 2022 (2022-10-07) * das ganze Dokument * ----- | 1-13 | |

RECHERCHIERTE SACHGEBIETE (IPC)

C04B

Der vorliegende Recherchenbericht wurde für alle Patentansprüche erstellt

| Recherchenort | Abschlußdatum der Recherche | Prüfer |
|---|---|---|
| München | 12. Februar 2025 | Kresoja, Radoje |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 19 9210

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

12-02-2025

| Im Recherchenbericht angeführtes Patentdokument | Datum der Veröffentlichung | Mitglied(er) der Patentfamilie | Datum der Veröffentlichung |
|---|---|---|---|
| EP 2607330 A1 | 26-06-2013 | KEINE | |
| EP 2722319 A2 | 23-04-2014 | KEINE | |
| JP 7149687 B2 | 07-10-2022 | JP 7149687 B2 | 07-10-2022 |
| | | JP 2018122539 A | 09-08-2018 |

EPO FORM P0461

Für nähere Einzelheiten zu diesem Anhang : siehe Amtsblatt des Europäischen Patentamts, Nr.12/82